# FASCICULE DE BREVET EUROPEEN

(11) **EP 3 325 270 B1**
(45) Date de publication et mention de la délivrance du brevet: **15.05.2019**
(21) Numéro de dépôt: 16760522.9
(22) Date de dépôt: 25.07.2016
(51) Int. Cl.: B32B 18/00, C04B 35/80, F02K 1/82, F02C 7/045, C04B 37/00, G10K 11/162

(54) **PROCEDE DE FABRICATION D'UN PANNEAU D'ATTENUATION ACOUSTIQUE EN MATERIAU COMPOSITE A MATRICE CERAMIQUE OXYDE**
VERFAHREN ZUR HERSTELLUNG EINER SCHALLDÄMMUNGSPLATTE AUS VERBUNDSTOFF MIT EINER KERAMIKOXIDMATRIX
PROCESS FOR MANUFACTURING AN ACOUSTIC ATTENUATION PANEL FROM A COMPOSITE MATERIAL WITH AN OXIDE CERAMIC MATRIX

(30) Priorité: 24.07.2015 FR 1557086
(43) Date de publication de la demande: 30.05.2018
(73) Titulaire: Safran Nacelles, 76700 Gonfreville-l'Orcher (FR)
(72) Inventeur: DELEHOUZE, Arnaud, 76430 Sainneville Sur Seine (FR); SENTIS, Sylvain, 76610 Le Havre (FR); DESJOYEAUX, Bertrand, 76310 Sainte Adresse (FR); VERSAEVEL, Marc, 76600 Le Havre (FR); FOSSE, Frédéric, 76133 Notre Dame-du-Bec (FR)
(74) Mandataire: Gaillarde, Frédéric F. Ch.
(86) Numéro de dépôt international: PCT/FR2016/051934
(87) Numéro de publication internationale: WO 2017/017367

(56) Documents cités:
- EP-A1- 2 472 509
- WO-A1-2013/153326
- WO-A1-2014/118216
- FR-A1- 2 852 003
- US-A1- 2003 059 577
- US-A1- 2006 025 514

## Description

La présente invention concerne le domaine des panneaux acoustiques notamment destinés à équiper un cône d'éjection des gaz d'un turboréacteur d'aéronef. L'invention concerne plus spécifiquement un procédé de fabrication d'un panneau d'atténuation acoustique en matériau composite à matrice céramique, ainsi qu'un panneau d'atténuation acoustique obtenu par ledit procédé.

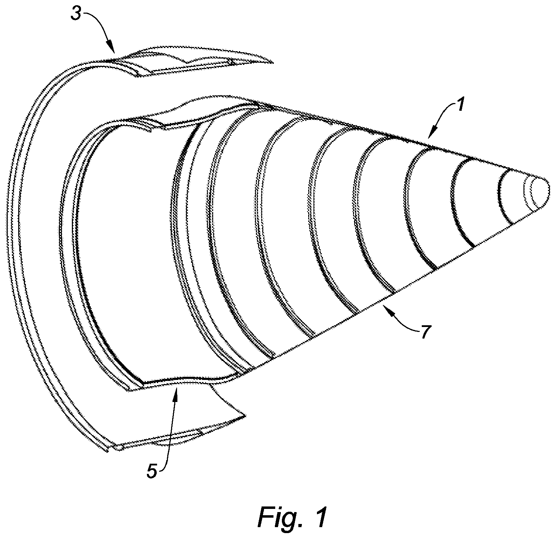

Comme cela est connu en soi, et représenté à la figure 1 ci-jointe, il convient en général de prévoir un cône d'éjection 1 à l'arrière d'un turboréacteur d'aéronef, afin d'une part d'optimiser l'écoulement des gaz chauds expulsés par le turboréacteur, et d'autre part d'absorber au moins une partie du bruit engendré par la rotation des turbines du turboréacteur et l'écoulement des gaz chauds expulsés .

Sur cette figure 1, l'amont et l'aval (par rapport au sens d'écoulement des gaz d'échappement du turboréacteur) sont situés respectivement à gauche et à droite de la figure).

Ce cône est destiné à être positionné en aval de la turbine du turboréacteur, de manière concentrique à une virole, ou « nozzle » 3, elle-même fixée sur le bord aval de la chambre de combustion du turboréacteur.

Plus précisément, le cône d'éjection 1 comprend, à proprement parler, une partie avant de cône 5 (souvent désignée par les termes anglo-saxons « front plug »), de forme sensiblement cylindrique, et une partie arrière de cône 7 (souvent désignée par les termes anglo-saxons « rear plug »), de forme conique.

La partie avant 5 peut être notamment acoustique ou monolithique raidie. Dans le cas où la partie avant 5 est acoustique, cela signifie qu'elle comprend au moins une structure d'atténuation acoustique périphérique de type sandwich comprenant au moins un résonateur fonctionnant selon le principe de Helmholtz, formé de cavités (par exemple de type nid d'abeille), recouvert d'une peau externe perforée et d'une peau interne pleine.

La peau externe constitue par ailleurs une surface de guidage aérodynamique de l'écoulement des gaz chauds éjectés (tôle) de la partie avant 5 du cône d'éjection.

Ces deux parties du cône d'éjection peuvent typiquement être formées par des tôles en alliage métallique de type Inconel 625 ou titane B21s.

Cependant, afin de réduire la masse du cône, l'utilisation de panneaux d'atténuation acoustique en composites à matrice céramique (CMC) sera préférée à celle des panneaux d'atténuation acoustiques métalliques.

L'utilisation de ces composites permet par ailleurs d'offrir une meilleure tenue dans le temps de panneaux qui sont exposés durablement à des températures élevées.

On connaît notamment du document WO 2014/118216 un procédé de fabrication d'un panneau d'atténuation acoustique réalisé en matériau composite, plus particulièrement en matériau composite à matrice céramique (CMC), matériau particulièrement résistant aux températures élevées pouvant dépasser 600 degrés Celsius et atteindre dans certains cas les 1000 degrés Celsius; ces températures se rencontrent notamment au niveau du cône d'éjection des gaz chauds du turboréacteur.

On connaît également WO 2013/153326 A1 qui décrit un panneau acoustique de type sandwich pour nacelle d'aéronef, comprenant une âme alvéolaire entre une peau composite pleine et une peau composite acoustique perforée et divulgue un procédé comprenant une étape de moulage intégral de la peau avec les alvéoles de l'âme centrale. Cependant ce document ne divulgue pas la formation in situ de la deuxième peau avec des rayons de raccordement.

La présente invention vise à simplifier et à réduire le coût de fabrication de panneaux en CMC, et se rapporte à cet effet à un procédé de fabrication d'un panneau d'atténuation acoustique en matériau composite à matrice céramique comprenant les étapes suivantes :
A- draper dans un moule une pluralité de plis constitués de renforts fibreux comprenant des fibres d'un matériau céramique définissant une première peau du panneau d'atténuation acoustique,
B- déposer sur la première peau une pluralité de blocs d'un premier matériau, dit matériau fugitif, de sorte à définir au moins un espace entre deux desdits blocs, les coins desdits blocs étant arrondis,
C- draper sur la surface constituée par les blocs une pluralité de plis constitués de renforts fibreux comprenant des fibres d'un matériau céramique de façon à définir une deuxième peau du panneau d'atténuation de façon à définir, par l'intermédiaire des coins desdits blocs, des rayons de raccordement desdites première et deuxième peaux avec des parois d'une âme alvéolaire du panneau acoustique,
D--infiltrer, au moyen d'un média liquide, le précurseur de la phase céramique à travers lesdites peaux et dans ledit au moins un espace séparant lesdits blocs de matériau fugitif,
E--procéder à l'élimination du média liquide par évaporation ou polymérisation,
F--procéder au frittage de l'ensemble, à une température permettant la consolidation du matériau céramique oxyde et l'élimination du matériau fugitif.

Ainsi, le procédé de fabrication selon l'invention permet d'obtenir un panneau en matériau composite à matrice céramique dans lequel l'âme alvéolaire est fabriquée en même temps que les peaux et leur assemblage, ce qui permet d'éviter la fabrication préalable de la structure alvéolaire, ainsi que son assemblage avec les peaux du panneau composite. De plus, la forme d'un rayon pour raccorder les première et deuxième peaux avec les parois de l'âme alvéolaire du panneau acoustique permet, avec peu de matière, de conférer au panneau d'atténuation acoustique une résistance élevée.

Suivant d'autres caractéristiques optionnelles du procédé selon l'invention, prises séparément ou en combinaison :
- on dépose deux étages de blocs en matériau fugitif, connectés et alignés ou non par l'intermédiaire d'une pluralité de protubérances également en matériau fugitif, créant après l'étape de frittage un septum en matériau céramique dont l'épaisseur est modulable selon le besoin acoustique ;
- après l'étape B, on ajoute des fibres céramiques dans l'espace interbloc afin de fabriquer un septum en composite à matrice céramique ;
- après l'étape B on dispose au moins un renfort fibreux tissé ou non, continu ou non en matériau céramique entre lesdits blocs de matériau fugitif;
- lesdits blocs insérés dans l'étape B ont des géométries diverses et variées permettant de garantir un pouvoir d'atténuation acoustique ;
- lesdits blocs en matériau fugitif intègrent des protubérances latérales de dimensions variables, qui définiront l'espacement entre les blocs et donc l'épaisseur des parois après frittage ;
- on perfore l'une desdites peaux du panneau acoustique, de manière à créer des trous acoustiques ;
- au moins un bloc de matériau fugitif comprend une pluralité de protubérances en matériau fugitif positionnées sur ledit bloc de façon à former, après l'étape de frittage de l'ensemble, une pluralité de trous acoustiques dans la deuxième peau du panneau acoustique ;
- le procédé comprend, avant l'étape F et de préférence avant l'étape D, une étape supplémentaire dans laquelle on dépose une plaque présentant une pluralité de protubérances en matériau fugitif positionnées de façon à ce que les protubérances traversent intégralement les plis de renforts fibreux d'une desdites peaux pour former, après l'étape de frittage de l'ensemble, une pluralité de trous acoustiques ;
- une pluralité de protubérances en matériau apte à résister à l'étape de frittage, est intégrée à une des surfaces moulantes de l'outillage, afin de former une pluralité de trous acoustiques dans l'une desdites peaux ;
- au moins un bloc en matériau fugitif présente une géométrie conformée pour définir, après l'étape de frittage de l'ensemble, au moins un canal de communication entre les alvéoles du panneau d'atténuation acoustique, permettant le drainage de liquides pouvant pénétrer dans le panneau lorsque celui-ci se trouve en situation de service ;
- lesdites peaux comprennent un renfort fibreux en oxyde métallique et une matrice en oxyde métallique ;
- on utilise au moins deux matériaux céramiques différents pour la matrice et le renfort fibreux desdites peaux. On adapte ainsi les caractéristiques locales de du panneau acoustique suivant les contraintes.

D'autres caractéristiques et avantages de la présente invention apparaitront à la lumière de la description qui va suivre et à l'examen des figures ci-annexées, dans lesquelles :
- la figure 1 représente un cône d'éjection tel que décrit dans le préambule de la présente description,
- la figure 2 illustre, en perspective, un panneau acoustique obtenu au moyen du procédé selon la présente invention,
- la figure 3 illustre une vue en coupe de ce panneau, en cours de fabrication,
- la figure 4 illustre une vue en perspective de dessus, des blocs de matériau fugitif intervenant dans le procédé selon la présente invention,
- la figure 5 est une vue en perspective de ces mêmes blocs, vus de dessous,
- la figure 6 illustre les alvéoles en composite à matrice céramique réalisées au moyen du procédé selon la présente invention,
- la figure 7 illustre un élément permettant de réaliser, de manière alternative, des trous dans la peau acoustique du panneau obtenu au moyen du procédé selon la présente invention, et
- la figure 8 illustre une vue en coupe d'un panneau acoustique à double étage (DDOF) réalisé au moyen du procédé selon la présente invention.

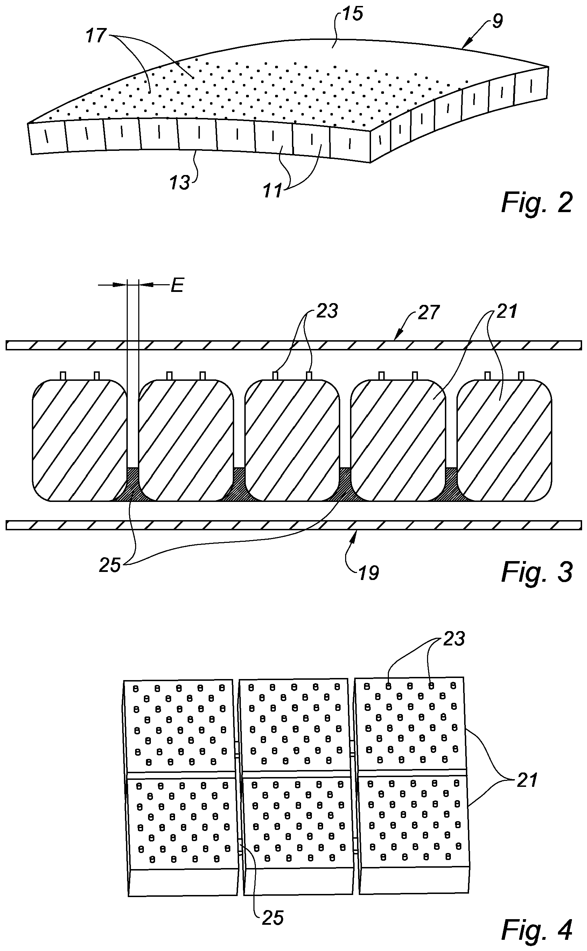

En se reportant à la figure 2, on peut voir un panneau acoustique 9 obtenu au moyen du procédé de la présente invention.

Ce panneau acoustique 9 comporte une pluralité d'alvéoles 11 prises entre une peau pleine 13 et une peau perforée 15 munie d'une pluralité de trous 17 débouchant dans les alvéoles 11.

Comme cela est connu en soi, la peau perforée 15 est destinée à être située du coté où se trouve la source de bruit que l'on cherche à atténuer, ce bruit pénétrant par les orifices 17 à l'intérieur des alvéoles 11 et subissant de la sorte une atténuation (résonateur de Helmholtz).

Dans le cadre de la présente invention, les alvéoles 11 et les deux peaux 13, 15 sont formées en composite à matrice céramique (CMC).

Comme cela est connu en soi, un tel matériau comprend une texture fibreuse prise dans une matrice en céramique.

A titre d'exemple, les fibres formant la préforme peuvent être en carbone, en carbure ou en oxyde métallique ; la céramique formant la matrice peut être en carbone ou en carbure de silicium, mais le plus souvent à base d'alumine, ces exemples n'étant bien entendu nullement limitatifs.

La figure 3 permet de comprendre comment le procédé selon la présente invention conduit au panneau acoustique représenté à la figure 2.

Comme cela est en effet visible sur cette figure 3, on commence par draper à l'intérieur d'un moule une pluralité de plis constitués de renfort fibreux, comprenant des fibres d'un matériau céramique, de manière à former une couche 19, elle-même destinée à former la peau pleine 13.

On dépose ensuite sur cette première couche 19 une pluralité de blocs 21 en matériau dit « fugitif », la géométrie de ces blocs définissant des volumes complémentaires (ou « négatifs ») des volumes définis par les alvéoles 11 ; les espaces E qui séparent ces blocs constituent les volumes positifs des parois de l'âme alvéolaire.

Comme cela est visible sur la figure 3, les coins desdits blocs sont arrondis. Cela permet de définir, par l'intermédiaire des coins des blocs, des rayons de raccordement des première et deuxième peaux avec des parois d'une âme alvéolaire du panneau acoustique. Le rayon de raccordement forme l'équivalent d'un ménisque convexe de chaque côté du bloc de matériau fugitif. La forme d'un rayon pour raccorder les première et deuxième peaux avec les parois de l'âme alvéolaire du panneau acoustique permet, avec peu de matière, de conférer au panneau d'atténuation acoustique une résistance élevée.

On notera que le matériau fugitif formant les blocs 21 peut être n'importe quel matériau apte à disparaître lors de l'opération de frittage : on peut utiliser notamment des matières thermoplastiques (polyéthylène ou autre) ou thermodurcissables (par exemple à base d'époxy) pour ce matériau fugitif, ou encore un métal à bas point de fusion (par exemple à base de plomb, d'aluminium ou d'étain). L'élimination du matériau fugitif lors du frittage sera au moins partielle, et de préférence totale. Cette élimination se fera notamment par combustion, oxydation, fusion, évaporation ou sublimation.

Selon une première variante possible, les blocs 21 sont surmontés de picots 23 également en matériau fugitif définissant des volumes correspondants aux trous 17 de la peau acoustique 15.

De manière préférée, des pontages 25 sont réalisés entre au moins certains des blocs 21, dans la partie de ces blocs situés à l'opposé de celle ou se trouve les picots 23.

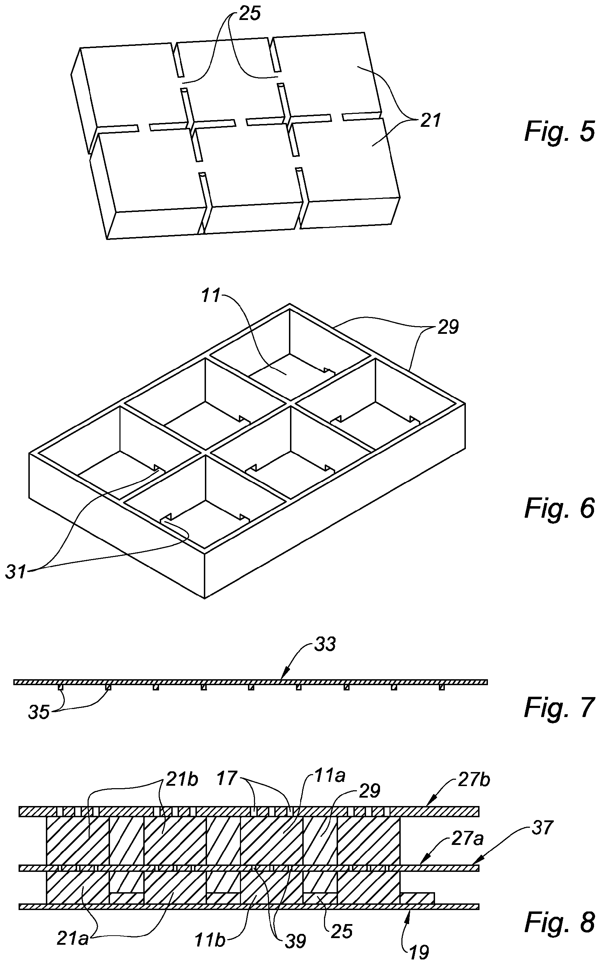

Ces blocs 21, surmontés le cas échéant de leurs picots 23 et reliés entre eux par les pontages 25, sont particulièrement visibles sur les vues en perspectives des figures 4 et 5 respectivement.

Une fois que les blocs 21 ont été déposés sur la première couche de fibres en matériau céramique 19, on vient recouvrir ces blocs d'une deuxième couche en fibres de matériau céramique 27 destinée à former la peau acoustique 15.

De manière optionnelle, on notera que l'on peut également insérer des fibres ou tout autre renfort fibreux en matériau céramique dans les espaces E séparant les blocs 21.

Les deux couches 19, 27 et les blocs 21 ainsi disposés à l'intérieur du moule destiné à conférer au panneau acoustique sa forme finale, on infiltre l'ensemble ainsi réalisé au moyen d'un média transportant le précurseur de la phase céramique.

Selon une première variante, ce média peut consister en une matrice précéramique (résine précurseur de céramique).

Selon une seconde variante, ce média peut consister en une suspension contenant les particules de céramique.

Ce média liquide vient ainsi imprégner les deux couches 19, 27 de fibres, et s'installe dans les interstices définis par les espaces E séparant les blocs de matériau fugitif 21.

Cette imprégnation s'applique également aux fibres de céramique disposées dans les espaces E lorsque cette option est retenue.

On procède ensuite à l'élimination du média transportant le précurseur de la phase céramique, par évaporation (cas d'une suspension contenant les particules de céramique) ou par polymérisation (cas d'une résine précurseur de céramique), permettant d'obtenir une première consolidation des deux couches 19, 27 ainsi qu'éventuellement des fibres disposées dans les espaces E.

L'étape suivante va consister à sortir l'ensemble ainsi séché de son outillage de filtration, puis à le soumettre à une très forte élévation de température (de l'ordre de 1000 degrés Celsius), de manière à réaliser le frittage de la céramique imprégnant les fibres de céramique susmentionnées.

De manière alternative, et si l'outillage de filtration le permet, l'étape de frittage pourrait être réalisée en laissant l'ensemble séché dans son outillage de filtration.

Lors de cette opération, le matériau fugitif formant les blocs 21, les picots 23 (le cas échéant) et les pontages 25 va subir une oxydation/combustion ou se sublimer, et s'échapper vers l'extérieur du moule par les trous formés par les picots, ou bien par des trous d'évacuation spécifiques situés au point bas de la peau pleine.

Ces blocs 21, ces picots 23 (le cas échéant) et ces pontages 25 ayant disparu, ne reste que leurs volumes complémentaires dans le panneau acoustique ainsi obtenu, c'est-à-dire des parois 29 (figure 6) en lieu et place des espaces E séparant les blocs fugitifs 21 des trous 17 dans la peau 9 en lieu et place des picots 23 (le cas échéant), et des passages 31 entre les alvéoles 11 formés dans les parois 29, en lieu et place des pontages 25.

Ces passages 31 permettent le drainage de liquides susceptibles de pénétrer dans les alvéoles du panneau acoustique lorsque celui-ci est en service.

On comprend à la lumière de ce qui précède que le procédé selon la présente invention permet d'obtenir de manière extrêmement simple un panneau d'absorption acoustique en composite à matrice céramique.

Une autre solution possible pour réaliser des trous 17 dans la peau acoustique 15, est d'utiliser une plaque 33 (voir figure 7) munie d'une pluralité de picots 35, ces picots correspondant aux trous 17.

Cette plaque est appliquée contre la deuxième couche de fibres 27, avant l'opération de frittage, et de préférence avant l'étape de filtration ou l'étape de polymérisation.

Selon une première option, cette plaque 33 peut également être formée en matériau fugitif auquel cas elle disparait lors de l'opération de frittage, laissant place aux trous 17.

Selon une seconde option, cette plaque peut être réalisée dans un matériau résistant aux températures de frittage, auquel cas elle peut faire partie du moule et être réutilisée pour la fabrication du panneau acoustique suivant, et les inserts devront présenter une forme démoulable.

On notera que la géométrie des blocs 21, des picots 23 et des pontages 25, peut bien entendu être adaptée en fonction des besoins (cylindre, parallélépipède,...) ; leur taille est aussi fonction des spécifications techniques recherchées.

On notera également, que selon une autre variante possible, on peut réaliser les trous 17 postérieurement à l'opération de frittage au moyen d'un outillage de perçage approprié.

En se reportant à présent à la figure 8, on peut voir une vue en coupe d'un panneau acoustique à deux étages (communément désigné par « DDOF », par opposition au panneau acoustique à simple étage « SDOF » présenté ci-dessus).

Un tel panneau acoustique à deux étages comprend, outre les éléments déjà présentés au sujet du panneau simple étage et désignés par les mêmes références, une couche intermédiaire 37 souvent désignée par le terme « septum », divisant les alvéoles 11 dans le sens de leur hauteur en deux demi-alvéoles 11a, 11b, cette couche intermédiaire 37 étant elle-même munie de trous 39 permettant une communication acoustique entre les deux demi-alvéoles 11a et 11b.

Pour réaliser ce panneau acoustique à deux étages au moyen du procédé selon l'invention, on procède de manière analogue à ce qui a été décrit ci-dessus à propos du panneau à simple étage, à ceci près que l'on procède selon deux étapes principales.

La première étape consiste à disposer sur la première couche de fibres 19, une première couche de blocs de matériau fugitif 21a et, le cas échéant, des fibres ou un matériau fibreux 27a, de manière analogue à ce qui a été décrit au sujet du panneau à simple étage.

A noter que les trous 39 peuvent être obtenus au moyen de picots surmontant le premier étage de blocs 21a, ou bien au moyen d'une plaque 33 en matériau fugitif, comme représenté à la figure 7.

On vient ensuite superposer un deuxième étage de blocs en matériau fugitif 21b sur la couche intermédiaire 27a, la forme de ces blocs correspondant de préférence, mais non nécessairement, à celle des blocs du premier étage 21a.

On recouvre enfin ces blocs 21b d'une deuxième couche en fibres de céramique 27b et on réalise les trous acoustiques dans cette deuxième couche 27b dans les mêmes conditions que celles évoquées ci-dessus au sujet du panneau acoustique à un seul étage.

Comme décrit plus haut, on infiltre l'ensemble ainsi obtenu d'un média liquide contenant le précurseur de la phase céramique, on procède à l'élimination de ce média par évaporation ou polymérisation, puis on soumet cet ensemble à un frittage permettant de faire disparaître le matériau fugitif des blocs 21a, 21b, des pontages 25 et des trous acoustiques réalisés dans les couches 37 et 27b de matériau fibreux.

On obtient de la sorte un panneau acoustique à deux étages, dans lesquels les ondes acoustiques peuvent pénétrer dans les alvéoles à deux étages, à travers les trous 17 de la peau extérieure 27b, et 39 du septum 37, permettant ainsi une atténuation acoustique optimale.

De manière optionnelle, les deux étages de blocs 21a, 21b pourraient être introduits en une seule étape, auquel cas ils seraient liés entre eux par les picots, l'ensemble de ces blocs et de ces picots étant dans ce cas fabriqués par synthèse additive par exemple.

Dans cette solution, on pourrait placer ou non des fibres entre ces picots, et le septum serait monolithique ou composite.

Par ailleurs, on peut aussi envisager, contrairement à ce qui a été représenté à la figure 8, que les cavités définissant les alvéoles de part et d'autre du septum 37, ne soient par forcément exactement en vis-à-vis.

Bien entendu, la présente invention n'est nullement limitée aux modes de réalisation décrit et représentés, fournis à titre de simples exemples.

C'est ainsi notamment que l'on pourrait étendre le concept de la présente invention à un panneau acoustique dans lequel les parois 29 des alvéoles 11, et les peaux pleine 13 et perforée 15 seraient obtenues au moyen de textures fibreuses (tissus, tresses, tricots, feutres,...) pré-imprégnées du média liquide

## Revendications

1. Procédé de fabrication d'un panneau d'atténuation acoustique (9) en matériau composite à matrice céramique comprenant les étapes suivantes :
A- draper dans un moule une pluralité de plis constitués de renforts fibreux comprenant des fibres d'un matériau céramique définissant une première peau (19) du panneau d'atténuation acoustique,
B- déposer sur la première peau une pluralité de blocs (21; 21a, 21b) d'un premier matériau, dit matériau fugitif, de sorte à définir au moins un espace entre deux desdits blocs, les coins desdits blocs (21; 21a, 21b) étant arrondis,
C- draper sur la surface constituée par les blocs une pluralité de plis constitués de renforts fibreux comprenant des fibres d'un matériau céramique de façon à définir une deuxième peau (27) du panneau d'atténuation acoustique, de façon à définir, par l'intermédiaire des coins desdits blocs (21 ; 21a ; 21b), des rayons de raccordement desdites première et deuxième peaux avec des parois d'une âme alvéolaire du panneau acoustique,
D- infiltrer, au moyen d'un média liquide, le précurseur de la phase céramique à travers lesdites peaux (19, 27) et dans ledit au moins un espace (E) séparant lesdits blocs de matériau fugitif,
E- procéder à l'élimination du média liquide par évaporation ou polymérisation,
F- procéder au frittage de l'ensemble, à une température permettant la consolidation du matériau céramique oxyde et l'élimination du matériau fugitif.

2. Procédé de fabrication selon la revendication 1, **caractérisé en ce qu'**on dépose deux étages de blocs en matériau fugitif (21a, 21b), connectés et alignés ou non par l'intermédiaire d'une pluralité de protubérances (39) également en matériau fugitif, créant après l'étape de frittage un septum en matériau céramique dont l'épaisseur est modulable selon le besoin acoustique.

3. Procédé selon l'une des revendications 1 ou 2, **caractérisé en ce qu'**après l'étape B, on ajoute des fibres céramiques dans l'espace interbloc afin de fabriquer un septum (37) composite à matrice céramique.

4. Procédé de fabrication selon l'une quelconque des revendications 1 à 3, **caractérisé en ce qu'**après l'étape B on dispose au moins un renfort fibreux tissé ou non, continu ou non en matériau céramique entre lesdits blocs de matériau fugitif (21; 21a, 21b).

5. Procédé de fabrication selon l'une quelconque des revendications précédentes, **caractérisé en ce que** lesdits blocs en matériau fugitif (21; 21a, 21b) intègrent des protubérances latérales de dimensions variables, qui définiront l'espacement entre les blocs et donc l'épaisseur des parois après frittage.

6. Procédé de fabrication selon l'une quelconque des revendications précédentes, dans lequel on perfore l'une (27) desdites peaux du panneau acoustique, de manière à créer des trous acoustiques (17).

7. Procédé de fabrication selon l'une quelconque des revendications 1 à 5, **caractérisé en ce qu'**au moins un bloc de matériau fugitif (21 ; 21a, 21b) comprend une pluralité de protubérances en matériau fugitif (23) positionnées sur ledit bloc de façon à former, après l'étape de frittage de l'ensemble, une pluralité de trous acoustiques (17) dans la deuxième peau (27) du panneau acoustique.

8. Procédé de fabrication selon l'une quelconque des revendications 1 à 5, **caractérisé en ce qu'**il comprend, avant l'étape F et de préférence avant l'étape D une étape supplémentaire dans laquelle on dépose une plaque (33) présentant une pluralité de protubérances (35) en matériau fugitif positionnées de façon à ce que les protubérances traversent intégralement les plis de renforts fibreux d'une (27) desdites peaux pour former, après l'étape de frittage de l'ensemble, une pluralité de trous acoustiques (17).

9. Procédé de fabrication selon l'une quelconque des revendications 1 à 5, **caractérisé en ce qu'**une pluralité de protubérances en matériau apte à résister à l'étape de séchage ou de frittage, est intégrée à une surface moulante de l'outillage, afin de former une pluralité de trous acoustiques (17) dans l'une (27) desdites peaux.

10. Procédé selon l'une quelconque des revendications précédentes, **caractérisé en ce qu'**au moins un bloc en matériau fugitif (21) présente au moins un pontage (25) réalisé entre lesdits blocs (21).

11. Procédé selon l'une quelconque des revendications précédentes, **caractérisé en ce que** lesdites peaux (19, 27) comprennent un renfort fibreux en oxyde métallique et une matrice en oxyde métallique.

12. Procédé selon l'une quelconque des revendications précédentes, **caractérisé en ce qu'**on utilise au moins deux matériaux céramiques différents pour la matrice, et/ou au moins deux matériaux céramiques différents pour les renforts fibreux.

## Patentansprüche

1. Verfahren zur Herstellung einer Akustikdämmplatte (9) aus Verbundmaterial mit keramischer Matrix, das die folgenden Schritte umfasst:
A- Drapieren einer Vielzahl von aus Faserverstärkungen, welche Fasern aus einem keramischen Material umfassen, bestehenden Lagen, die eine erste Haut (19) der Akustikdämmplatte definieren, in einer Form,
B- Aufsetzen einer Vielzahl von Blöcken (21; 21a, 21b) aus einem ersten Material, das als flüchtiges Material bezeichnet wird, auf die erste Haut, um mindestens einen Raum zwischen zwei der Blöcke zu definieren, wobei die Ecken der Blöcke (21; 21a, 21b) abgerundet sind,
C- Drapieren einer Vielzahl von aus Faserverstärkungen, welche Fasern aus einem keramischen Material umfassen, bestehenden Lagen so auf der von den Blöcken gebildeten Fläche, dass eine zweite Haut (27) der Akustikdämmplatte definiert wird, sodass mit Hilfe der Ecken der Blöcke (21; 21a; 21b) Speichen zum Verbinden der ersten und zweiten Haut mit Wänden eines Wabenkerns der Akustikplatte definiert werden,
D- Infiltrieren des Vorläufers der keramischen Phase mittels eines flüssigen Mediums durch die Häute (19, 27) hindurch und in den mindestens einen Raum (E) hinein, der die Blöcke aus flüchtigem Material trennt,
E- Verfahren mit dem Entfernen des flüssigen Mediums durch Verdampfen oder Polymerisieren,
F- Verfahren mit dem Sintern der Anordnung bei einer Temperatur, die das Konsolidieren des oxidkeramischen Materials und das Entfernen des flüchtigen Materials ermöglicht.

2. Herstellungsverfahren nach Anspruch 1, **dadurch gekennzeichnet, dass** zwei Etagen von Blöcken aus flüchtigem Material (21a, 21b) aufgesetzt werden, die mit Hilfe einer Vielzahl von Vorsprüngen (39), ebenfalls aus flüchtigem Material, verbunden und ausgerichtet werden oder nicht, welche nach dem Schritt des Sinterns eine Trennwand aus keramischem Material bilden, deren Dicke je nach akustischer Anforderung modulierbar ist.

3. Verfahren nach einem der Ansprüche 1 oder 2, **dadurch gekennzeichnet, dass** nach dem Schritt B keramische Fasern in den Blockzwischenraum eingefügt werden, um eine Verbundtrennwand (37) mit keramischer Matrix herzustellen.

4. Herstellungsverfahren nach einem der Ansprüche 1 bis 3, **dadurch gekennzeichnet, dass** nach dem Schritt B mindestens eine durchgängige oder nicht durchgängige Web- oder Vlies-Faserverstärkung aus keramischem Material zwischen den Blöcken aus flüchtigem Material (21; 21a, 21b) angeordnet wird.

5. Herstellungsverfahren nach einem der vorstehenden Ansprüche, **dadurch gekennzeichnet, dass** die Blöcke aus flüchtigem Material (21; 21a, 21b) seitliche Vorsprünge von variablen Abmessungen beinhalten, die den Abstand zwischen den Blöcken und damit die Dicke der Wände nach dem Sintern definieren.

6. Herstellungsverfahren nach einem der vorstehenden Ansprüche, wobei eine (27) der Häute der Akustikplatte perforiert wird, um Akustiklochungen (17) zu erzeugen.

7. Herstellungsverfahren nach einem der Ansprüche 1 bis 5, **dadurch gekennzeichnet, dass** mindestens ein Block aus flüchtigem Material (21; 21a, 21b) eine Vielzahl von Vorsprüngen aus flüchtigem Material (23) umfasst, die so auf dem Block positioniert sind, dass nach dem Schritt des Sinterns der Anordnung eine Vielzahl von Akustiklochungen (17) in der zweiten Haut (27) der Akustikplatte gebildet werden.

8. Herstellungsverfahren nach einem der Ansprüche 1 bis 5, **dadurch gekennzeichnet, dass** es vor dem Schritt F und vorzugsweise vor dem Schritt D einen zusätzlichen Schritt umfasst, in dem eine Platte (33) aufgesetzt wird, die eine Vielzahl von Vorsprüngen (35) aus flüchtigem Material umfasst, welche so positioniert sind, dass die Vorsprünge vollständig durch die Faserverstärkungslagen einer (27) der Häute hindurchgehen, um nach dem Schritt des Sinterns der Anordnung eine Vielzahl von Akustiklochungen (17) zu bilden.

9. Herstellungsverfahren nach einem der Ansprüche 1 bis 5, **dadurch gekennzeichnet, dass** eine Vielzahl von Vorsprüngen aus Material, das dem Schritt des Trocknens oder des Sinterns widerstehen kann, in einer Abformfläche des Werkszeugs beinhaltet ist, um in einer (27) der Häute eine Vielzahl von Akustiklochungen (17) zu bilden.

10. Verfahren nach einem der vorstehenden Ansprüche, **dadurch gekennzeichnet, dass** mindestens ein Block aus flüchtigem Material (21) mindestens eine Verbrückung (25) aufweist, die zwischen den Blöcken (21) ausgeführt ist.

11. Verfahren nach einem der vorstehenden Ansprüche, **dadurch gekennzeichnet, dass** die Häute (19, 27) eine Faserverstärkung aus Metalloxid und eine Matrix aus Metalloxid umfassen.

12. Verfahren nach einem der vorstehenden Ansprüche, **dadurch gekennzeichnet, dass** mindestens zwei verschiedene keramische Materialien für die Matrix, und/oder mindestens zwei verschiedene keramische Materialien für die Faserverstärkungen verwendet werden.

## Claims

1. A method for manufacturing an acoustic attenuation panel (9) made of a ceramic matrix composite material comprising the following steps of:
A. drape-molding in a mold a plurality of plies constituted by fibrous reinforcements comprising fibers of a ceramic material defining a first skin (19) of the acoustic attenuation panel,
B. depositing on the first skin a plurality of blocks (21; 21a, 21b) of a first material, called fugitive material, so as to define at least one space between two of said blocks, the corners of said blocks (21; 21a, 21b) being rounded,
C. drape-molding on the surface constituted by the blocks a plurality of plies constituted by fibrous reinforcements comprising fibers of a ceramic material so as to define a second skin (27) of the acoustic attenuation panel, so as to define, via the corners of said blocks (21; 21a; 21b), radii for connecting said first and second skins with walls of a cellular core of the acoustic panel,
D. infiltrating, by means of a liquid medium, the precursor of the ceramic phase through said skins (19, 27) and in said at least one space (E) separating said blocks of fugitive material,
E. proceeding with the elimination of the liquid medium by evaporation or polymerization,
F. proceeding with the sintering of the whole, at a temperature enabling the consolidation of the oxide ceramic material and the elimination of the fugitive material.

2. The manufacturing method according to claim 1, **characterized in that** two stages of blocks (21a, 21b) made of fugitive material are deposited, whether connected and aligned or not via a plurality of protrusions (39) also made of fugitive material, creating after the sintering step a septum made of ceramic material whose thickness is adjustable according to the acoustic need.

3. The manufacturing method according to any of claims 1 or 2, **characterized in that** after step B, ceramic fibers are added in the inter-block space in order to manufacture a ceramic matrix composite septum (37).

4. The manufacturing method according to any one of claims 1 to 3, **characterized in that** after step B at least one fibrous reinforcement which is woven or not, continuous or not made of ceramic material, is disposed between said blocks of fugitive material (21; 21a, 21b).

5. The manufacturing method according to any one of the preceding claims, **characterized in that** said blocks (21; 21a, 21b) made of fugitive material integrate lateral protrusions with variable dimensions, which will define the spacing between the blocks and therefore the thickness of the walls after sintering.

6. The manufacturing method according to any one of the preceding claims, wherein one (27) of said skins of the acoustic panel is perforated, so as to create acoustic holes (17).

7. The manufacturing method according to any one of claims 1 to 5, **characterized in that** at least one block (21; 21a, 21b) of fugitive material comprises a plurality of protrusions (23) made of fugitive material positioned on said block so as to form, after the step of sintering the whole, a plurality of acoustic holes (17) in the second skin (27) of the acoustic panel.

8. The manufacturing method according to any one of claims 1 to 5, **characterized in that** it comprises, before step F and preferably before step D, an additional step in which a plate (33) having a plurality of protrusions (35) made of fugitive material positioned so that the protrusions pass integrally through the plies of fibrous reinforcements of one (27) of said skins is deposited to form, after the step of sintering the whole, a plurality of acoustic holes (17).

9. The manufacturing method according to any one of claims 1 to 5, **characterized in that** a plurality of protrusions made of a material adapted to withstand the drying or sintering step, is integrated into a molding surface of the tooling in order to form a plurality of acoustic holes (17) in one (27) of said skins.

10. The manufacturing method according to any one of the preceding claims, **characterized in that** at least one block (21) made of fugitive material has at least one bridging (25) formed between said blocks (21).

11. The manufacturing method according to any one of the preceding claims, **characterized in that** said skins (19, 27) comprise a fibrous reinforcement made of metal oxide and a matrix made of metal oxide.

12. The manufacturing method according to any one of the preceding claims, **characterized in that** at least two different ceramic materials are used for the matrix, and/or at least two different ceramic materials for the fibrous reinforcements.
